# EUROPÄISCHE PATENTSCHRIFT

(11) **EP 1 353 196 B1**
(45) Veröffentlichungstag und Bekanntmachung des Hinweises auf die Patenterteilung: **27.10.2004**
(21) Anmeldenummer: 03006412.5
(22) Anmeldetag: 21.03.2003
(51) Int. Cl.: G01V 8/20

(54) **Objekterfassung und Lichtgitter**
Object detection and light curtain
Détection d'un objet et barrière optique

(30) Priorität: 12.04.2002 DE 10216122
(43) Veröffentlichungstag der Anmeldung: 15.10.2003
(73) Patentinhaber: SICK AG, 79183 Waldkirch (DE)
(72) Erfinder: Haberer, Manfred, 79359 Riegel (DE); Stähler, Thomas, 65551 Limburg (DE)
(74) Vertreter: Ludewigt, Christoph

(56) Entgegenhaltungen:
- DE-A- 4 201 116
- DE-A- 4 422 497
- DE-A- 10 033 077
- US-A- 4 384 201
- US-A- 5 768 327

## Beschreibung

Die Erfindung betrifft ein Verfahren zur Erfassung von zwei oder mehr beweglichen Objekten in einem Überwachungsbereich nach dem Oberbegriff des Anspruchs 1 und ein Lichtgitter gemäß dem Oberbegriff des Anspruchs 8 zur Durchführung des Verfahrens.

Derartige Überwachungen unter Verwendung von Lichtgittern finden beispielsweise in hoch automatisierten Fertigungssystemen, beispielsweise im Automobilbau, Anwendung, bei denen Werkstücke automatisch zugeführt, bearbeitet und wieder abgeführt werden. Diese Fertigungssysteme bei derartigen Materialzuführstationen in Bearbeitungsstraßen sind in der Regel mit vollautomatischen Bearbeitungszentren (z.B. Robotereinrichtungen) und Transporteinrichtungen versehen. Da die Zuführ- und insbesondere die Bearbeitungsbereiche zugleich mögliche Gefahrenbereiche für Bedienungspersonal darstellen, ist es bei solchen Systemen erforderlich, einen Schutz vor unzulässigem Eindringen vorzusehen. Ein solcher Schutz kann mittels Lichtgittern der eingangs erwähnten Art erreicht werden.

Der Begriff "Licht" ist generell nicht als Beschränkung auf sichtbares Licht zu verstehen. Vielmehr soll unter dem Begriff "Licht" allgemein jede Art von Licht und insbesondere jede Art von UV-Licht, IR-Licht und sichtbares Licht zu verstehen sein.

Die Zugangsbereiche bzw. Übergabestationen für Material zu gefährlichen Räumen, beispielsweise Roboterstationen, oder Maschinen sind üblicherweise mittels sogenannter Mutingstationen überwacht. Dies können Lichtgitter sein, die grundsätzlich den Zugang von Personal überwachen aber deaktiviert werden können (muting), wenn Material zugeführt wird. Eine solche ist beispielsweise in der DE 201 03 828 U1 beschrieben. Diese bekannten Mutingstationen benötigen nachteiligerweise einen hohen Installationsaufwand, und die Inbetriebnahme ist sehr aufwendig. Ein wesentlicher Nachteil ist, dass bei einer gültigen Mutingbedingung die Überwachungsfunktion vollständig überbrückt ist und somit die Überwachung des Zugangs während dieser Zeit ausgeschaltet ist. Konstruktiv sind Sender und Empfänger des Lichtgitters einer Mutingstation so anzubringen, dass keine Person während des Mutingvorganges durch den Zwischenraum von Sensor und Mutingobjekt in den Gefahrenbereich gelangen kann. Üblicherweise müssen diese Zwischenräume deshalb mit zusätzlichen Pendeltüren abgesichert werden.

Aus der DE 44 24 537 ist ein System bekannt, bei dem ein Lichtgitter ein Objekt als sogenanntes Floating Blanking Objekt im Schutzfeld erkennt und die definiert Größe und Position des Objektes überwacht. In diesem System ist die Überwachung des Objektes begrenzt auf die Größe und evtl. die Position der Objektes. Es ist somit nicht möglich, dass sich beispielsweise zwei oder drei definierte Objekte mit definierter Größe und Abstand gleichzeitig im Lichtgitter aufhalten, ohne dass die Schaltausgänge abgeschaltet werden.

Insgesamt besteht somit bei den bekannten Überwachungssystemen das Problem darin zu unterscheiden, ob sich im Überwachungsbereich zulässige Objekte (beispielsweise Maschinenelemente) oder unzulässige Objekte, nämlich beispielsweise die Beine eines Menschen aufhalten.

[0006a] Aus der DE 4422497 A1 ist ein Lichtgitter bekannt, das vertikal an einer Abkantmaschine angeordnet ist und das auch dann seine Überwachungsfunktion beibehält, wenn ein abzukantendes Blechteil in den Überwachungsbereich geführt wird und in die Abkantmaschine eingelegt wird. Auch während des Abkantprozesses bleibt die Überwachungsfunktion des Lichtgitters erhalten, da das Lichtgitter in einem Einlernprozess die durch den Abkantprozess vorgegebene Bewegung des Blechteils, nämlich Geschwindigkeit entlang einer definierten Bahn in einem definierten Zeitintervall, als zulässige Bewegung des Blechteils eingelernt hat.

[0006b] Aus der DE 10033077 A1 ist ein Lichtgitter bekannt, das zwischen zulässigen und nicht zulässigen Objekten, die in den Überwachungsbereich eindringen, unterscheiden kann, wobei ein zulässiges Objekt an Hand seiner Größe und/oder seiner Bewegung erkannt wird. Ein zulässiges Objekt kann beispielsweise ein Roboterarm oder ein zu bearbeitendes Werkstück sein.

Davon ausgehend liegt der Erfindung die Aufgabe zugrunde, ein Verfahren zur Objekterfassung und ein entsprechendes Lichtgitter der eingangs angegebenen Art zu schaffen, bei dem sich mehrere Objekte gleichzeitig durch den Überwachungsbereich bewegen können, ohne die Überwachungsfunktion zu deaktivieren.

Diese Aufgabe wird gelöst durch ein Verfahren mit den Merkmalen des Anspruchs 1 und ein Lichtgitter mit den Merkmalen des Anspruchs 8.

Die erfindungsgemäße Objekterfassung besitzt einen Auswertealgorithmus unter Verwendung von drei Kriterien, welche entscheiden, ob sich ein zulässiges Objekt oder ein nicht zulässiges Objekt im Überwachungsbereich befindet. Um die Zulässigkeit des Objektes zu bejahen, muss auf jeden Fall der Eintrittsbereich aktiviert werden. Wird der Erstkontakt des Objektes mit dem Schutzfeld hinsichtlich des vorgegebenen Eintrittsbereiches abweichend aktiviert - wenn beispielsweise eine Person mit dem ersten Bein mitten in das Schutzfeld hineintritt anstatt dass eine Stütze eines Materialtransportwagens seitlich einfährt - wird dies erkannt und die zu überwachende Maschine abgestellt. Dem Lichtgitter wird mit Hilfe eines Konfigurationstools somit - wie ausgeführt - zum einen der Eintrittsbereich für die Objekte konfiguriert sowie als weitere Kriterien die maximale Größe eines Objektes sowie der Abstand der Objekte. Das Lichtgitter überwacht ständig, ob die möglicherweise im Schutzfeld befindlichen Objekte als diejenigen Objekte identifiziert werden können, welche als gültig konfiguriert sind. Zusätzlich wird beim Erkennen eines neuen Objektes überprüft, ob der Eintritt des Objektes im Eintrittsbereich stattgefunden hat. Falls - wie ausgeführt - ein Objekt in einem anderen Bereich innerhalb des Schutzfeldes eintritt oder eine nicht erlaubte Größe hat oder ein nicht erlaubter Abstand zwischen mehreren Objekten vorliegt, führt dies zu einer sofortigen Abschaltung.

Die Vorteile, welche mit dem erfindungsgemäßen Überwachungssystem erzielt werden, sind vielfältig. Der wesentliche Vorteil besteht darin, dass es mit der Erfindung erstmals möglich ist mehrere zulässige Objekte im Schutzfeld zuzulassen, und die Objekte sogar durch das Schutzfeld hindurch zu bewegen. Des weiteren ist eine einfache Montage, Installation sowie Konfiguration möglich. Der Materialaufwand ist gering, da keine Mutingsensoren, wie sie beispielsweise in der Vorrichtung nach der DE 201 03 828 U1 offenbart sind, erforderlich sind. Weiterhin ist eine permanente Überwachung des Schutzfeldes möglich, auch wenn sich zulässige Objekte im Schutzfeld befinden. Eine Person kann beispielweise nicht neben einem zulässigen Materialtransportwagen durch das Schutzfeld hindurchlaufen. Der Gefahrenbereich ist dadurch besser abgesichert. Es sind keine zusätzlichen Pendeltüren notwendig. Das System ist darüberhinaus manipulationssicher, da die Lichtgitterfunktion immer aktiv ist.

Zusätzlich zu den vorgenannten drei Kriterien kann gemäß der Weiterbildung in Anspruch 2 als weiteres Kriterium die Anzahl der Objekte überwacht werden. Dies ist beispielsweise dann vorteilhaft, wenn immer die gleiche Art Materialtransportsystem durch das Lichtgitter passieren soll, beispielsweise in der Automobilproduktion. Dazu kann es zur weiteren Erhöhung der Sicherheit von Vorteil sein, wenn als weiteres Kriterium die Reihenfolge der Objekte geprüft wird.

In Weiterbildung der Erfindung kann schließlich als weiteres Kriterium vorgesehen sein, dass die tatsächlichen Objektbewegungen durch das Lichtgitter mit gespeicherten Mustern zulässiger Objektbewegungen verglichen werden.

Es ist auch denkbar, dass als weiteres Kriterium geprüft wird, ob nach einem ersten zulässigen Objekt in einem bestimmten Abstand ein zweites Objekt in den Schutzbereich eintritt.

Gemäß der Weiterbildung in Anspruch 5 kann der Eintrittsbereich durch eine oder mehrere Lichtschranken gebildet sein.

In Weiterbildung der Erfindung kann der Eintrittsbereich für das Objekt vorgegeben festgelegt sein und sich am Anfang, am Ende oder aber auch in der Mitte des Lichtgitters befinden.

In einer besonders vorteilhaften Weiterbildung der Erfindung werden die Kriterien in einem Einlernvorgang (teach-in) automatisch eingelernt. Dazu wird das Lichtgitter entweder über einen Schalter soft- oder hardwaremäßig in einen Einlernvorgang versetzt und nach Beendigung des Einlernens der Kriterien wieder in den Normalbetrieb versetzt. Das Rücksetzen in den Normalbetrieb kann auch automatisch erfolgen, beispielsweise nach einer vorgegebene Anzahl von Objekten, die durch das Lichtgitter gefahren sind. Dadurch kann die Bedienung und Einstellung des Lichtgitters vereinfacht werden.

Vorrichtungsgemäß wird die Aufgabe gelöst durch ein Lichtgitter mit einer Lichtsendeleiste, die eine Reihe nebeneinander angeordneter Lichtsender aufweist und einer Lichtempfangsleiste, die den Lichtsendem entsprechende ebenfalls nebeneinander angeordnete Lichtempfänger aufweist, so dass eine Vielzahl zueinander paralleler Lichtschranken gebildet sind. Das Lichtgitter weist wenigstens eine Steuer- und Auswerteeinheit, die die einzelnen Lichtschranken steuert und auswertet, so dass bei Unterbrechung einer oder mehrerer Lichtschranken durch ein Objekt ein Warnsignal ableitbar ist und die Steuer- und Auswerteeinheit darüber hinaus so ausgelegt ist, dass das Unterbrechen einer Lichtschranke in einem vorbestimmten Bereich nicht zu einem Warnsignal führt und so die Schutzfunktion ausführbar ist. Erfindungsgemäß führt nur dann ein Unterbrechen einer Lichtschranke zu einem Warnsignal führt, wenn eines der drei nachfolgenden Kriterien, nämlich
- Vorgabe eines Eintrittsbereiches für die Objekte
- Vorgabe der Größe der Objekte
- Vorgabe des Abstand bzw. Abstände zwischen den Objekten nicht erfüllt ist.

Die Vorteile eines solchen Lichtgitters wurden bereits oben in Zusammenhang mit dem erfindungsgemäßen Verfahren beschrieben.

In Weiterbildung der Erfindung ist sowohl der Sende- als auch der Empfangsleiste je eine eigene Steuer- und Auswerteeinheit zugeordnet. Wenn die Sende- und Empfangsleiste dann beispielsweise optisch synchronisierbar sind, wie dies beispielsweise in der DE 38 03 033 A1 beschrieben ist, braucht zwischen den beiden Leisten keine elektrische Verbindung vorliegen, wodurch eine Installation variabler und einfacher gestaltbar ist.

Wenn die Steuer- und Auswerteeinheit in der Sende- und/oder Empfangsleiste integriert ist, ist keine Zusatzeinheit notwendig und die komplette Funktionalität ist im Lichtgitter integriert.

Um die Kriterien nicht mühsam einprogrammieren zu müssen, ist in Weiterbildung des erfindungsgemäßen Lichtgitters vorgesehen, dass die Steuerund Auswerteeinheit ein Schaltmittel aufweist, mit dem das Lichtgitter in den Einlemmodus versetzbar ist. Diese Schaltmittel kann ein tatsächlicher Schalter oder auch ein Softwarebefehl sein.

Um die Einstellung weiter zu vereinfachen kann weiter vorgesehen sein, dass im Einlernvorgang nach Durchfahren einer vorgegebenen Anzahl von Objekten das Lichtgitter selbsttätig das Lichtgitter wieder vom Einlernmodus in den Normalbetrieb umschaltet.

Im Folgenden wird die Erfindung anhand eines Ausführungsbeispiels unter Bezugnahme auf die Zeichnung im Einzelnen erläutert. In der Zeichnung zeigen:
- Fig. 1: ein erfindungsgemäßes Lichtgitter mit Schutzfeld in einer Einsatzsituation in der Draufsicht;

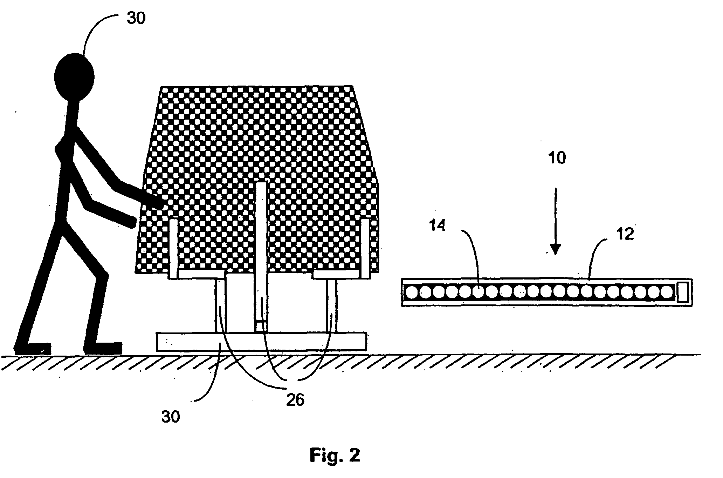

- Fig. 2: eine schematische Darstellung eines Überwachungsbereiches in der Seitenansicht im Bereich eines Lichtgitters zur Erläuterung des erfindungsgemäßen Verfahrens.

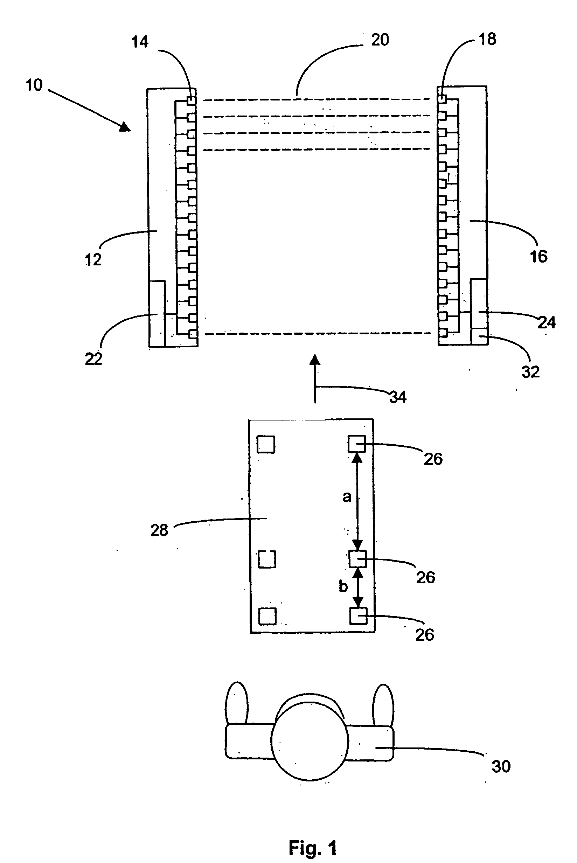

Ein erfindungsgemäßes Lichtgitter 10 weist eine Lichtsendeleiste 12 auf, die eine Reihe nebeneinander angeordneter Lichtsender 14 aufweist und eine Lichtempfangsleiste 16, die den Lichtsendern 14 entsprechende, ebenfalls nebeneinander angeordnete Lichtempfänger 18 aufweist. Jeweils gegenüberliegende Lichtsender 14 und Lichtempfänger 18 bilden in bekannter Weise eine Vielzahl zueinander paralleler Lichtschranken 20, deren Lichtstrahl in Fig. 1 durch gestrichelte Linien dargestellt ist. Das Lichtgitter 10 mit seinen Lichtschranken 20 definiert somit zwischen Sendeleiste 12 und Empfangsleiste 16 einen Überwachungsbereich mit einem Schutzfeld. Das Lichtgitter 10 weist weiter wenigstens eine Steuer- und Auswerteeinheit. In dem dargestellten Ausführungsbeispiel ist sowohl in der Sende- 12 als auch in der Empfangsleiste 16 wenigstens je eine Steuer- und Auswerteeinheit 22, 24 vorgesehen. Die Steuer- und Auswerteeinheit 22 steuert die einzelnen Lichtsender 14 der Sendeleiste 12 und die Steuer- und Auswerteeinheit 24 der Empfangsleiste steuert die Lichtempfänger 18 und wertet deren Signale aus, so dass bei Unterbrechung einer oder mehrerer Lichtschranken 20 durch ein Objekt ein Warnsignal aus der Steuer- und Auswerteeinheit 24 ableitbar ist. Diese Signal kann auch zum Abschalten einer gefährlichen Maschine dienen.

Die grundsätzliche Funktionsweise eines solchen Lichtgitters ist z.B. in der DE 38 03 033 A1 beschrieben. Die einzelnen Lichtschranken 20 des Lichtgitters 10 werden zyklisch der Reihe nach aktiviert. Dabei werden die Lichtsender 14 und Lichtempfänger 18 auf optischem Wege über beispielsweise die erste und/oder letzte Lichtschranke synchronisiert, so dass immer der dem momentan sendenden Lichtsender gegenüberliegende Lichtempfänger aktiviert ist. Insbesondere ist dadurch eine elektrische Verbindung zwischen der Sendeleiste 12 und der Empfangsleiste 16 nicht notwendig.

Die Steuer- und Auswerteeinheit 24 ist erfindungsgemäß so ausgelegt, dass nur dann das Unterbrechen einer Lichtschranke 20 zu einem Warnsignal führt, wenn eines der drei nachfolgenden Kriterien
- ein vorgegebener Eintrittsbereich für die Objekte
- eine vorgegebene Größe der Objekte
- ein vorgegebener Abstand bzw. Abstände zwischen den Objekten nicht erfüllt ist.

Damit kann das Lichtgitter unterscheiden, ob sich in dem Überwachungsbereich zulässige Objekte oder ob sich in ihm nicht zulässige Objekte aufhalten. Bei einem zulässigen Objekt kann es sich beispielsweise um drei Streben 26 einer Transporteinrichtung 28 handeln. Bei dem nicht zulässigen Objekt kann es sich um einen Menschen 30 handeln.

Das erfindungsgemäße Verfahren und die Funktionsweise des erfindungsgemäßen Lichtgitters lassen sich beispielsweise wie folgt beschreiben:

Zunächst müssen die vorgenannten wenigstens drei Kriterien in das Lichtgitter 10 eingegeben werden. Dies kann mit Hilfe eines Konfigurationstools, das ein PC mit entsprechender Konfigurationssoftware sein kann, geschehen. Besonders bevorzugt ist es aber, wenn das Lichtgitter in einen Einlernmodus (auch teach-in Modus genannt) versetzt wird, indem es die genannten Kriterien bei Durchfahren des erlaubten Objektes, z.B. des Transponwagens 28, selbsttätig einlernt. Dazu weist die Steuer- und Auswerteeinheit 24 ein Umschaltmittel 32 auf, über das der Einlernmodus initiiert werden kann. Im Einlernmodus wird dann der Transportwagen 28 durch das Schutzfeld in Transportrichtung 34 mit der üblichen Transportgeschwindigkeit bewegt. Dabei werden der Eintrittsbereich, hier die in Fig. 1 unterste Lichtschranke, die maximale Größe der Streben 26 und die beiden Abstände a und b der Streben 26 eingelemt. Optional könnten noch die Anzahl der Streben, die Reihenfolge der Streben, wenn sie unterscheidbar wären und/oder die Objektbewegung, z.B. die Transportgeschwindigkeit als Kriterien eingelernt werden. Nach Abschluss des Einlernvorganges wird ggf. automatisch in den normalen Betriebsmodus umgeschaltet.

Wenn im Normalbetrieb, also wenn das Lichtgitter seine Schutzfunktion ausübt, eines der Kriterien nicht erfüllt ist, wenn beispielsweise der Mensch 30 mit einem Bein mitten in das Schutzfeld tritt, der Eintrittsbereich, also die in Fig. 1 unterste Lichtschranke, aber nicht unterbrochen wird, wird das zugehörige Kriterium des vorgegebenen Eintrittsbereichs nicht erfüllt und das Warnsignal ausgegeben und/oder die gefährliche Maschine oder Anlage abgeschaltet. Die Transporteinrichtung 28 hingegen durchfährt mit ihren Streben 26 zunächst den Eintrittsbereich des Schutzfeldes, was erlaubt ist und nicht zu einem Warnsignal oder Abschaltung führt. Gleiches gilt für die weiteren Kriterien. So kann das Lichtgitter erkennen, dass sich die Dicke des Beines der Person 30 von dem Querschnitt der Streben 26 unterscheidet. Schließlich ist bei der Transporteinrichtung 28 der Abstand a bzw. b zwischen zwei Streben 26 immer konstant, während sich beim Gehen der Person 30 der Abstand zwischen den Beinen laufend verändert.

## Patentansprüche

1. Verfahren zur Erfassung von zwei oder mehr beweglichen, zulässigen Objekten in einem Überwachungsbereich, wobei ein im wesentlichen horizontales Lichtgitter (10) mit einer Mehrzahl von zueinander parallelen Lichtschranken (20) verwendet wird, wobei die nachfolgenden drei Kriterien in Kombination überwacht werden:
- ein Eintrittsbereich für die Objekte
- Größe der Objekte
- Abstand bzw. Abstände zwischen den Objekten
und dass bei Nichterfüllung wenigstens eines dieser drei Kriterien erkannt wird, dass sich ein nicht zulässiges Objekt im Überwachungs bereich befindet und dass ein Steuersignal abgegeben wird.

2. Verfahren nach dem vorhergehenden Anspruch, **dadurch gekennzeichnet, dass** als weiteres Kriterium die Anzahl der Objekte überwacht wird.

3. Verfahren nach einem der vorhergehenden Ansprüche, **dadurch gekennzeichnet, dass** als weiteres Kriterium die Reihenfolge der Objekte überwacht wird.

4. Verfahren nach einem der vorhergehenden Ansprüche, **dadurch gekennzeichnet, dass** als weiteres Kriterium Muster der Objektbewegungen gespeichert und mit den tatsächlichen Objektbewegungen verglichen werden.

5. Verfahren nach einem der vorhergehenden Ansprüche, **dadurch gekennzeichnet, dass** der Eintrittsbereich durch eine oder mehrere Lichtschranken gebildet ist.

6. Verfahren nach einem der vorhergehenden Ansprüche, **dadurch gekennzeichnet, dass** sich der Eintrittsbereich am Anfang, am Ende oder in der Mitte des Lichtgitters (10) befindet.

7. Verfahren nach einem der vorhergehenden Ansprüche, **dadurch gekennzeichnet, dass** die Kriterien in einem Einlernvorgang (teach-in) eingelernt werden.

8. Lichtgitter, insbesondere zur Durchführung eines Verfahrens nach einem der vorhergehenden Ansprüche, mit einer Lichtsendeleiste (12), die eine Reihe nebeneinander angeordneter Lichtsender (14) aufweist und einer Lichtempfangsleiste (16), die den Lichtsendern (14) entsprechende ebenfalls nebeneinander angeordnete Lichtempfänger (18) aufweist, so dass eine Vielzahl zueinander paralleler Lichtschranken (20) gebildet sind, die einen sich im wesentlichen horizontal erstreckenden Überwachungsbereich definieren, mit wenigstens einer Steuer- und Auswerteeinheit (22, 24), die die einzelnen Lichtschranken steuert und auswertet, so dass bei Unterbrechung einer oder mehrerer Lichtschranken (20) durch ein nicht zulässiges Objekt ein Warnsignal ableitbar ist und die Steuer- und Auswerteeinheit (22, 24) Mittel aufweist zum Erkennen zwei oder mehrerer zulässiger Objekte, wobei die Mittel so ausgelegt sind, dass dann zulässig sind, wenn die drei nachfolgenden Kriterien erfüllt sind:
- ein vorgegebener Eintrittsbereich für die Objekte
- eine vorgegebene Größe der Objekte
- ein vorgegebener Abstand bzw. Abstände zwischen den Objekten.

9. Lichtgitter nach Anspruch 8, **dadurch gekennzeichnet, dass** der Sender- (12) und der Empfangsleiste (16) je eine eigene Steuer- und Auswerteeinheit (22 bzw. 24) zugeordnet ist.

10. Lichtgitter nach Anspruch 9, **dadurch gekennzeichnet, dass** die Steuer- und Auswerteeinheit (22 bzw. 24) in der Sende- (12) und/oder Empfangsleiste (16) integriert ist.

11. Lichtgitter nach einem der vorhergehenden Ansprüche, **dadurch gekennzeichnet, dass** die Steuer- und Auswerteeinheit (24) ein Schaltmittel (32) aufweist, mit dem das Lichtgitter (10) in einen Einlernmodus (teach-in) versetzbar ist.

12. Lichtgitter nach Anspruch 10, **dadurch gekennzeichnet, dass** die Steuer- und Auswerteeinheit (24) nach Durchfahren einer vorgegebenen Anzahl von Objekten das Lichtgitter selbsttätig wieder vom Einlernmodus in den Normalbetrieb umschaltet.

## Claims

1. Method for detection of two or more moving, permissible objects in a monitoring area, with an essentially horizontal light grating (10) having two or more mutually parallel light barriers (20) being used, with the following three criteria being monitored in combination:
- an entry area for the objects
- size of the objects
- distance or distances between the objects
and in that, if at least one of these criteria is not satisfied, the method identifies that a non-permissible object is located in the monitoring area, and in that a control signal is emitted.

2. Method according to the preceding claim, **characterized in that** the number of objects is monitored as a further criterion.

3. Method according to one of the preceding claims, **characterized in that** the sequence of the objects is monitored as a further criterion.

4. Method according to one of the preceding claims, **characterized in that** the pattern of the object movements is stored, and is compared with the actual object movements, as a further criterion.

5. Method according to one of the preceding claims, **characterized in that** the entry area is formed by one or more light barriers.

6. Method according to one of the preceding claims, **characterized in that** the entry area is located at the start, at the end or in the centre of the light grating (10).

7. Method according to one of the preceding claims, **characterized in that** the criteria are learnt during a learning process (teach-in).

8. Light grating, in particular carrying out a method according to one of the preceding claims, having a light transmission strip (12) which has a row of light transmitters (14) arranged alongside one another, and having a light receiving strip (16) which has light receivers (18) which correspond to the light transmitters (14) and are likewise arranged alongside one another, such that a large number of mutually parallel light barriers (20) are formed, which define an essentially horizontally extending monitoring area, having at least one control and evaluation unit (22, 24), which controls and evaluates the individual light barriers such that a warning signal can be derived if one or more light barriers (20) is or are interrupted by a non-permissible object, and the control and evaluation unit (22, 24) has means for identification of two or more permissible objects, with the means being designed such that the objects are permissible when the following three criteria are satisfied:
- a predetermined entry area for the objects
- a predetermined size of the objects
- a predetermined distance or distances between the objects.

9. Light grating according to Claim 8, **characterized in that** the transmitter strip (12) and the receiving strip (16) each have their own associated control and evaluation unit (22 or 24, respectively).

10. Light grating according to Claim 9, **characterized in that** the control and evaluation unit (22 or 24, respectively) is integrated in the transmitting strip (12) and/or in the receiving strip (16).

11. Light grating according to one of the preceding claims, **characterized in that** the control and evaluation unit (24) has a switching means (32) which can switch the light grating (10) to a learning mode (teach-in).

12. Light grating according to Claim 10, **characterized in that**, once a predetermined number of objects have passed through, the control and evaluation unit (24) automatically once again switches the light grating from the learning mode to normal operation.

## Revendications

1. Procédé de détection de deux ou plus de deux objets mobiles dans une zone de surveillance, en utilisant un réseau optique (10) sensiblement horizontal comportant une pluralité de barrières photoélectriques (20) mutuellement parallèles, **caractérisé par le fait que** les trois critères suivants sont surveillés en combinaison :
- une zone d'entrée affectée aux objets
- taille desdits objets
- distance(s) séparant lesdits objets ;
et **par le fait qu'**un signal de commande est délivré en cas de non-satisfaction à au moins l'un de ces trois critères.

2. Procédé selon la revendication précédente, **caractérisé par le fait que** le nombre des objets est surveillé en tant que critère supplémentaire.

3. Procédé selon l'une des revendications précédentes, **caractérisé par le fait que** l'ordre successif des objets est surveillé en tant que critère supplémentaire.

4. Procédé selon l'une des revendications précédentes, **caractérisé par le fait que** des modèles des mouvements des objets sont mémorisés en tant que critère supplémentaire, et sont comparés aux mouvements effectifs desdits objets.

5. Procédé selon l'une des revendications précédentes, **caractérisé par le fait que** la zone d'entrée est matérialisée par une ou plusieurs barrière(s) photoélectrique(s).

6. Procédé selon l'une des revendications précédentes, **caractérisé par le fait que** la zone d'entrée se trouve au début, à la fin ou au centre du réseau optique (10).

7. Procédé selon l'une des revendications précédentes, **caractérisé par le fait que** les critères sont acquis par un processus d'apprentissage (teach-in).

8. Réseau optique comprenant une réglette (12) émettrice de lumière, munie d'une rangée d'émetteurs de lumière (14) juxtaposés, et une réglette (16) réceptrice de lumière munie de récepteurs de lumière (18) correspondant aux émetteurs de lumière (14) et semblablement agencés en juxtaposition, donnant ainsi naissance à une multiplicité de barrières photoélectriques (20) parallèles les unes aux autres, avec au moins une unité (22, 24) d'interprétation et de commande qui commande et interprète les barrières photoélectriques individuelles de façon telle qu'un signal d'alerte puisse être dérivé en cas d'interruption d'une ou plusieurs barrière(s) photoélectrique(s) (20) par un objet, et l'unité (22, 24) de commande et d'interprétation est en outre conçue de telle sorte que l'interruption d'une barrière photoélectrique (20) dans une zone prédéterminée ne se traduise pas par un signal d'alerte, notamment pour la mise en oeuvre d'un procédé selon l'une des revendications précédentes, **caractérisé par le fait que** l'interruption d'une barrière photoélectrique (20) implique un signal d'alerte, ou une mise à l'arrêt d'une machine, uniquement lorsqu'il n'est pas satisfait à l'un des trois critères suivants
- une zone d'entrée préétablie affectée aux objets
- une taille préétablie desdits objets
- une ou des distance(s) préétablie(s) séparant lesdits objets.

9. Réseau optique selon la revendication 8, **caractérisé par le fait qu'**une unité propre (22 ou 24) de commande et d'interprétation est respectivement associée à la réglette émettrice (12) et à la réglette réceptrice (16).

10. Réseau optique selon la revendication 9, **caractérisé par le fait que** l'unité (22 ou 24) de commande et d'interprétation est intégrée dans la réglette émettrice (12) et/ou dans la réglette réceptrice (16).

11. Réseau optique selon l'une des revendications précédentes, **caractérisé par le fait que** l'unité (24) de commande et d'interprétation présente un moyen de commutation (32) par lequel ledit réseau optique (10) peut être transposé à un mode apprentissage (teach-in).

12. Réseau optique selon la revendication 10, **caractérisé par le fait que**, après passage d'un nombre d'objets préétabli, l'unité (24) de commande et d'interprétation ramène automatiquement ledit réseau optique du mode apprentissage au fonctionnement normal.
